(19) Europäisches Patentamt
European Patent Office
Office européen des brevets

(11) Publication number: 0 107 127
A1

(12) # EUROPEAN PATENT APPLICATION

(21) Application number: 83110016.9

(22) Date of filing: 06.10.83

(51) Int. Cl.³: C 08 F 10/00, C 08 F 4/60

(30) Priority: 06.10.82 JP 176826/82

(43) Date of publication of application: 02.05.84
Bulletin 84/18

(84) Designated Contracting States: DE FR GB IT NL

(71) Applicant: SUMITOMO CHEMICAL COMPANY, LIMITED,
15 Kitahama 5-chome Higashi-ku, Osaka-shi Osaka-fu (JP)

(72) Inventor: Baba, Kazuo, 4-12, Aobadai-5-chome, Ichihara-shi (JP)
Inventor: Mashita, Kentaro, 9-3, Aobadai-4-chome, Ichihara-shi (JP)
Inventor: Kawamata, Syozo, 1114-8, Anegasaki, Ichihara-shi (JP)
Inventor: Katao, Masaaki, 135, Iriyamazu, Ichihara-shi (JP)
Inventor: Kawai, Yoshio, 9, Yushudainishi-1-chome, Ichihara-shi (JP)

(74) Representative: Vossius Vossius Tauchner Heunemann Rauh, Siebertstrasse 4 P.O. Box 86 07 67, D-8000 München 86 (DE)

(54) **Process for producing polyolefin.**

(57) In a process in which at least one olefin is polymerized in the liquid phase in the presence or a catalyst system comprising a solid catalyst component, which contains at least one transition metal compound, and an organoaluminum compound to produce a polyolefin substantially insoluble in said liquid phase, the improvement comprising carrying out said polymerization under the following conditions:

(1) said solid catalyst component is a solid compound prepared by contacting at least one transition metal compound with a solid magnesium compound, 10% by weight or less of the solid catalyst component being 2 μ or less in particle size,

(2) the surfaces of the polymerization vessel in contact with the polymerization mixture are finished to a surface roughness of 2.5 μ or less,

(3) the Reynolds number of the flow of the reaction mixture in the polymerization vessel is maintained at $5 \times 10^4$ or more, and

(4) an antistatic agent is present in an amount of 0.1 to 50 mg/liter based on the volume of the liquid phase.

EP 0 107 127 A1

our ref.: S 660 EP
SUMITOMO CHEMICAL COMPANY, LIMITED
Osaka, Japan
Case: A8135-02

VOSSIUS · VOSSIUS · TAUCHNER
HEUNEMANN · RAUH
PATENTANWÄLTE
SIEBERTSTR. 4, 8000 MÜNCHEN 80
TEL. (089) 47 40 75

0107127

PROCESS FOR PRODUCING POLYOLEFIN

This invention relates to a method for inhibiting the build-up of polymers on the wall of the polymerization vessel in a process of the so-called slurry polymerization in which at least one olefin is polymerized in the liquid phase in the presence of a catalyst to produce a polyolefin substantially insoluble in said liquid phase.

In the slurry polymerization the difficulties resulting from the build-up of polymers on or the adhesion of polymers to the wall of the polymerization vessel lie in a significant reduction in the polymerization capacity of the polymerization vessel due to the decrease in the rate of heat removal through the wall of the polymerization vessel and, in extreme cases, in the repletion of the polymerization vessel with a bulk polymer.

The present inventors conducted an extensive study on the prevention of the adhesion of polymer to the wall of the polymerization vessel. As a result, they accomplished the present invention which is predicated upon the finding that in the olefin polymerization by use of a solid catalyst component containing at least one transition metal compound, the adhesion of polymers can be prevented by reducing the effect of the catalyst on the adhesion of polymers, polishing the wall of the polymerization vessel, optimizing the state of flow of the polymerization mixture, and adding an antistatic agent

to the polymerization system.

An object of this invention is to provide a method for preventing the adhesion of polymers to the wall of the polymerization vessel in a process for producing a polyolefin by slurry polymerization.

According to this invention, there is provided a method for preventing the adhesion of polymers to the wall of the polymerization vessel in a process for producing a polyolefin, in which at least one olefin is polymerized in the liquid phase in the presence of a catalyst system comprising a solid catalyst component, which contains at least one transition metal compound, and an organoaluminum compound to form a polyolefin substantially insoluble in said liquid phase. The method comprises carrying out said polymerization under the following conditions:

(1) said solid catalyst component is a solid compound prepared by contacting at least one transition metal compound with a solid magnesium compound, 10% by weight or less of the solid catalyst component being 2 μ or less in particle size,

(2) the surfaces of the polymerization vessel in contact with the polymerization mixture are finished to a surface roughness of 2.5 μ or less,

(3) the Reynolds number of the flow of reaction mixture in the polymerization vessel is maintained at $5 \times 10^4$ or above, and

(4) an antistatic agent is present in an amount

of 0.1 to 50 mg/liter based on the volume of the liquid phase. The invention is described below in detail.

The solid catalyst component used in this invention is a solid compound prepared by contacting at least one transition metal compound with a solid magnesium compound, the proportion of fine particles, 2 μ or less in particle size, being 10% by weight or less. A desirable solid catalyst component is a granular solid compound in which the solid magnesium compound is a solid product prepared by the reaction of an organomagnesium compound with an aluminum halide compound and/or a silicon halide compound, the transition metal compound being a titanium compound and/or a vanadium compound. The catalyst described in U.S. Patent 4,223,117 is an example for an especially suitable catalyst. The organoaluminum compound used in this invention can be any of those usually used as a catalyst component in olefin polymerization.

If the polymerization proceeds in the presence of the catalyst component dissolved in the liquid phase, it is likely that the formation of fine polymer particles which tend to adhere electrostatically to the wall, or the formation of membraneous polymer due to polymerization on the wall of the polymerization vessel occurs. It is desirable, therefore, to wash the solid catalyst component to remove those constituents which are soluble in the polymerization medium. Examples of the solvents for washing are saturated aliphatic

hydrocarbons such as porpane, butane, pentane, hexane, heptane, and octane, cycloaliphatic hydrocarbons such as cyclohexane and methylcyclohexane, aromatic hydrocarbons such as benzene, toluene, and xylenes, and halohydrocarbons formed by the partial replacement of hydrogen atoms of said hydrocarbons with halogen atoms. The washing can be performed by stirring the solid catalyst component in a solvent for 10 minutes or more, preferably one hour or more, at room temperature or higher temperatures, preferably 80°C or above. By using a washed solid catalyst component, it is possible to prevent more effectively the adhesion of polymers and to reduce the amount of an antistatic agent.

The proportion of fine particles in the solid catalyst component should be reduced, because the fine particles themselves and the polymer produced by them are apt to adhere electrostatically to the wall of the polymerization vessel. It is necessary that the proportion of fine particles, 2 μ or less in particles size, is 10% by weight or less based on the solid catalyst component. The average particle size of the solid catalyst component is preferably 3 μ or more, most preferably 5 to 20 μ. A solid catalyst component having such a particle size distribution can be obtained by controlling the formation of the solid catalyst component and also by removing fine particles from the solid catalyst component by a suitable separation technique. When fine particles of 2 μ or less in particle size are removed,

it becomes possible to reduce the formation of a polymer of small particle size which tends to adhere to the wall of the polymerization vessel and to prevent the adhesion of polymers to the wall in the presence of a reduced amount of an antistatic agent.

Many compounds and compositions are known as catalyst components for olefin polymerization. However, in the case of a catalyst system comprising a combination of an organoaluminum compound and a transition metal compound, used as soluble catalyst component, such as titanium tetrachloride, tetrabutoxytitanium, and vanadium acetylacetonate, there occurs vigorous adhesion of polymers to the wall of the polymerization vessel occurs which cannot be prevented even under the required conditions specified in (2), (3) and (4) of the attached Claim 1. According to this invention, in order to reduce the polymer adhesion caused by the catalyst, those ingredients which dissolve during polymerization and produce irregular polymers, are effectively removed from the solid catalyst component by washing. An even better result is achieved by removing from the solid catalyst component fine particles which promote the adhesion.

In the present process, the flow pattern in the polymerization vessel is such that the Reynolds number is maintained at 5 x $10^4$ or above, preferably 9 x $10^4$ or above. Such a flow pattern is realized by the proper selection of the dimensions of impeller, polymerization vessel and operation conditions. The wall

of the polymerization vessel should be finished to a surface roughness of 2.5 μ or below. Such a surface roughness is achieved by buffing or by a surface treatment such as electrolytic polishing. It is also desirable to remove those obstacles which may give rise to dead spaces.

In the present process, the antistatic agents to be added to the polymerization system are those compounds having sufficient solubilities in the polymerization medium to assure uniform distribution throughout the polymerization system. In the following are given examples of such compounds.

(1) Higher fatty acid soaps represented by the general formula RCOOM, wherein R is a saturated or unsaturated hydrocarbon radical having 12 to 22 carbon atoms and M is an alkali or alkaline earth metal (the same applies hereinafter).

(2) Salts of sulfuric acid esters of higher alcohols represented by the general formula $ROSO_3M$.

(3) Salts of sulfuric acid esters of higher secondary alcohols represented by the general formula $\genfrac{}{}{0pt}{}{R}{R'}\!\!>CHOSO_3M$, wherein the definition of R' is the same as that of R, and R and R' may be the same or different (the same applies hereinafter).

(4) Alkali or alkaline earth metal salts of the reaction products of castor oil, olive oil, peanut oil, or cottonseed oil and sulfuric acid.

(5) Alkali or alkaline earth metal salts of mixed esters of polyhydric alcohols with higher fatty acids

and sulfuric acid.

(6) Salts of sulfuric acid esters of higher fatty acid alkylolamides represented by the general formula RCONH $-(CH_2)_n-$ $OSO_3M$, wherein n is a number from 1 to 10 (the same applies hereinafter).

(7) Compounds represented by the general formula R $-(OCH_2CH_2)_n-$ $OSO_3M$.

(8) Salts of (higher alkyl)sulfonic acids represented by the general formula $RSO_3M$.

(9) Salts of alkylarylsulfonic acids.

(10) Condensation products of the compounds represented by the general formula RCOCl and the compounds represented by the general formula $\overset{R'}{\overset{|}{N}}H -(CH_2)_n- SO_3M$.

(11) Condensation products of the compounds represented by the general formula R-COCl and the compounds represented by the general formula HO $-(CH_2)_n-$ $SO_3M$.

(12) Alkali or alkaline earth metal salts of dialkylsulfosuccinic acids.

(13) Alkali or alkaline earth metal salts of partial esters of higher alcohols with phosphoric acid.

(14) Salts of primary amines represented by the general formula $[R-NH_3]^+A^-$, wherein A is chlorine, bromine or other halogen atoms, or $R\overset{O}{\overset{\|}{C}}O$.

(15) Quatenary ammonium salts represented by the general formula $\left[ R - \underset{CH_3}{\underset{|}{\overset{R'}{\overset{|}{N}}}} - CH_3 \right]^{+} X^{-}$, wherein X

represents a halogen atom (the same applies hereinafter).

(16) Compounds represented by the general formula

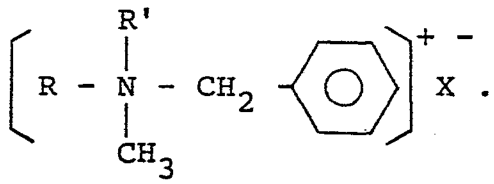

(17) Compounds represented by the general formula

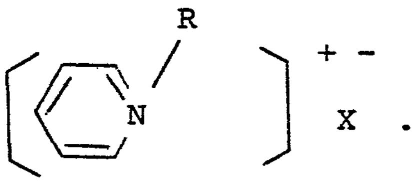

(18) Compounds of the alkylglycine type represented by the general formula

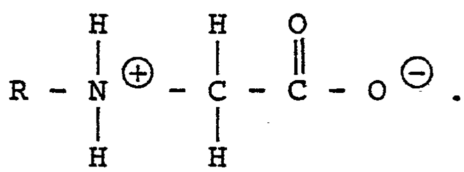

(19) Compounds of the betaine type represented by the general formula 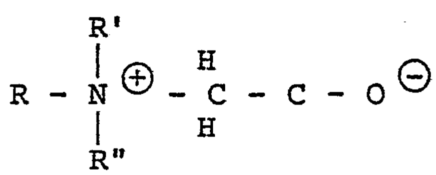, wherein the definition of R" is the same as that of R, and R, R' and R" may be the same or different.

(20) Compounds of the imidazoline type represented by the general formula

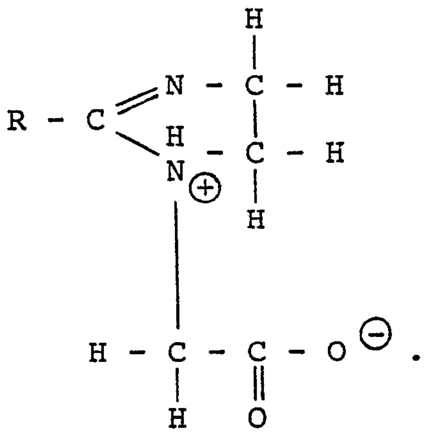

(21) Compounds of the alkylaminesulfonic acid type represented by the general formula 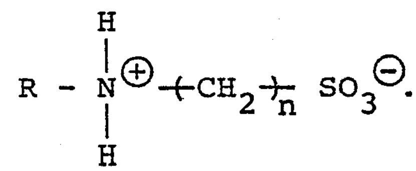

(22) Polyoxyethylene alkyl ethers represented by the general formula $R-O(CH_2CH_2O)_{n-1}CH_2CH_2OH$.

(23) Addition products of alkylphenols and polymerized ethylene oxide.

(24) Esters of polyethyleneglycols with higher fatty acids.

(25) Compounds represented by the general formula

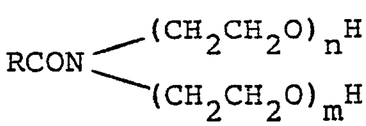 , wherein n and m, which may be the same or different, are numbers of 1 to 10 (the same applies hereinafter).

(26) Compounds represented by the general formula

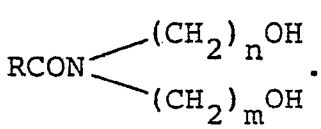

(27) Polyoxyethylenealkylamines represented by the general formula $R - N \begin{matrix} \diagup (CH_2CH_2O)_nH \\ \diagdown (CH_2CH_2O)_mH \end{matrix}$.

(28) Alkylmercaptan ethers represented by the general formula $R\text{-}S\text{-}(CH_2CH_2O)_nH$.

(29) Glycerol higher fatty acid esters.

(30) Sorbitan higher fatty acid esters.

(31) Commercial antistatic agents for petrochemical fuel oil, such as Stadis 450 (trade name) supplied by Du Pont Co.

Of the above examplified compounds, the most suitable antistatic agents are alkali metal salts of dialkylsulfosuccinic acids, particularly sodium di-2-ethylhexylsulfosuccinate. The alkali metal salts of dialkylsulfosuccinic acids are advantageously used for the following reasons:

1. they have low toxicity and weak odor;

2. they are effective in preventing adhesion even when present in a small amount in the polymerization system;

3. they scarcely interfere with the polymerization; and

4. even if they contaminate a polymer, they exert no adverse effect upon the physical properties of the polymer such as processability, mechanical properties, color, odor, etc.

The antistatic agents are added to the polymerization system in an amount of preferably 0.1 mg/liter, more preferably 1.0 mg/liter or more, based on the polymerization liquid phase. Although there is no upper limit, it is desirable that the amount be 50 mg/liter or less, because a larger amount of an antistatic agent would exert an adverse effect upon the polymerization activity.

Olefins suitable for the present process, are e.g. those having 2 to 15 carbon atoms such as ethylene, propylene, butene-1, 4-methylpentane-1, hexene-1, vinylcyclohexane, and styrene. However, the present process is used chiefly in the polymerization of ethylene alone or of a mixture of ethylene with an α-olefin such as propylene, butene-1, pentene-1, hexene-1, or octene-1.

The polymerization is carried out usually at a temperature ranging from room temperature to 110°C, at which the polymer which is formed is substantially insoluble in the liquid phase of the polymerization system. The polymerization pressure is not critical but usually ranges from atmospheric pressure to about 100 atmospheres. The polymerization is carried out in the liquid phase; it is possible to use as diluent aliphatic hydrocarbons such as propane, butane, pentane, hexane, heptane and octane and mixtures thereof. It is also possible to employ the method of bulk polymerization in which the monomer itself serves as the liquid phase. Molecular weight regulators such as

hydrogen and various organo metallic compounds may be added to the polymerization system. The polymerization may be conducted batchwise, or continuously, or in series polymerization in which the polymerization proceeds in several polymerization vessels connected in series.

The invention is further illustrated below by the Examples, but the invention is not limited thereto.

Reference Example 1

Synthesis of solid catalyst component (A):

(1) Synthesis of solid magnesium compound:

Into a 5-liter glass flask provided with a stirrer, a dropping funnel, and a thermometer, which had been dried under reduced pressure and flushed with nitrogen, was charged 2.5 liters (5.25 moles of n-BuMgCl) of a solution of n-butyl magnesium chloride (n-BuMgCl) in dibutyl ether. To the stirred mixture, was added slowly and dropwise through the dropping funnel 0.54 liter (4.6 moles) of silicon tetrachloride to form white precipitate. During the dropwise addition, the flask was cooled so as to keep the temperature of reacting mixture at 30°C. After completion of the addition, stirring was continued for one hour at the same temperature. The temperature was then elevated to 60°C and stirring was continued for another hour. The reaction mixture was then cooled down to room temperature. The

solids were collected by filtration through a glass filter, washed five times with 2.5 liters of n-heptane at room temperature, and dried under reduced pressure to yeild 640 g of a white solid.

(2) Synthesis of solid catalyst component:

Into a 5-liter glass flask, was charged 500 g of the white solid obtained in (1). The white solid was covered with 1.5 liters of titanium tetrachloride and allowed to react at 100°C for one hour. After completion of the reaction, the solid product was washed 5 times with 2.5 liters of n-heptane at room temperature and dried under reduced pressure to obtain a light brown solid. The solid was washed by dispersing again in 2.5 liters of n-heptane and stirring 4 hours at 98°C. The washed solid was collected by filtration at 80°C and dried to yield 400 g of a solid catalyst component [hereinafter referred to as solid catalyst component (A)]. The solid catalyst component (A) showed an average particle size of 15 μ and contained 1% by weight or less of fine particles of 2 μ or below in particle size.

Reference Example 2

Synthesis of solid catalyst component (B).

A solid catalyst component [hereinafter referred to as solid catalyst component (B)] was synthesized in the same manner as in Reference Example 1, except that a solution of isoamylmagnesium chloride

(iso-AmMgCl) in diisoamyl ether was used in place of the solution of n-BuMgCl in dibutyl ether and the temperature of the reaction of silicon tetrachloride with iso-AmMgCl was 15°C. The solid catalyst component (B) showed an average particle size of 5 μ and the proportion of fine particles, 2 μ or less in particle size, was 8% by weight.

Reference Example 3

Preparation of solid catalyst component (C).

Fine particles of the solid catalyst component (B) obtained in Reference Example 2 were collected and designated solid catalyst component (C). The proportion of finer particles, 2 μ or less in particle size, in the solid catalyst component (C) was 50% by weight.

Examples 1 to 4 and Comparative Examples 1 to 6

Ethylene homopolymer (Example 3) and ethylene-butene-1 copolymers (other Examples and Comparative Examples) were prepared in a 300-liter stainless steel reactor in the presence of those catalyst systems and under those conditions which were as shown in the Table. In the steady state, the organoaluminum compound, transition metal compound as catalyst component, hydrogen, butene-1 (except for Example 3), and butane were fed at a constant rate to the reactor and ethylene was fed so as to keep the reactor at a constant internal pressure. Continuous polymerization was carried out by

withdrawing the reaction mixture at a rate corresponding to the rate of feed. The antistatic agent shown in Table was fed to the reactor so as to keep it at a constant concentration, shown in Table, in the liquid phase of the polymerization system. The polymerization temperature was maintained at 60°C by controlling the temperature of cooling water in the jacket. The degree of polymer build-up on the wall and the properties of the resulting polymer were as shown in the Table.

In Comparative Examples 1 and 2, the polymerization procedure was the same as in Examples 1 and 2, except that no antistatic agent was added. As suggested by the decrease in U value of the reactor wall during the polymerization, the polymer build-up on the wall was observed upon inspection of the uncovered reactor after completion of the polymerization.

The polymerization procedures in Comparative Examples 3 and 4 were the same as that in Example 1, except that the Reynolds number of the fluid flow in the reactor was decreased and the surface roughness of the reactor wall was increased by changing the method of polishing. In Comparative Example 3, after several hours of operation, the withdrawal of the reaction mixture from the reactor became impossible. The polymerization was discontinued and the interior of the uncovered reactor was inspected to find the formation of a massive polymer. In Comparative Example 4, a decrease in U valve of the reactor wall was observed during the

polymerization and the post-inspection of uncovered reactor confirmed the polymer build-up on the wall.

In Comparative Examples 5 and 6, polymerization was carried out by using, respectively, titanium tetrachloride and tetrabutoxytitanium, both being liquid transition metal compounds, as catalyst components. After a very short period of operation, adhesion of a large amount of polymer to the reactor wall was observed upon inspection of the uncovered reactor.

In Comparative Example 7, polymerization was carried out in the same manner as in Example 1, except that the solid catalyst component (C) was used. A decrease in U value of the reactor wall was observed during the polymerization and polymer build-up was confirmed upon inspection of uncovered reactor.

Table

| No. | Catalyst system | | Operation conditions | |
|---|---|---|---|---|
| | Organo-aluminum compound *1 | Transition metal compound *2 | Press. (kg/cm2) | Polymerization rate (kg/hour) |
| Example 1 | TEA | A | 18.5 | 11 |
| 2 | " | B | 21.0 | 8 |
| 3 | " | A | 41.0 | 8 |
| 4 | " | A | 16.5 | 11 |
| Comparative Example 1 | TEA | A | 18.5 | 11 |
| 2 | " | B | 21.0 | 10 |
| 3 | " | A | 18.5 | - |
| 4 | " | A | 18.5 | 11 |
| 5 | " | $TiCl_4$ | 25.1 | 1.8 |
| 6 | DEAC | $Ti(OBu)_4$ | 25.1 | 1.4 |
| 7 | TEA | C | 18.5 | 11 |

- Cont'd -

Note: *1 TEA: triethylaluminum;
DEAC: diethylaluminum chloride.

*2 A, B, C: solid catalyst components (A), (B) and (C), respectively.

Table (Cont'd)

| Operation conditions | | | | |
| --- | --- | --- | --- | --- |
| Antistatic agent | | Surface finish of reactor | | Reynolds number of fluid flow in reactor |
| Type *3 | Concn. (mg/liter) | Method | Roughness (μ) | |
| OSS | 4.4 | Buff #300 | 2.5 | $9 \times 10^4$ |
| " | " | " | " | " |
| " | 2.5 | " | " | " |
| SD | 4.9 | " | " | " |
| - | 0 | Buff #300 | 2.5 | $9 \times 10^4$ |
| - | 0 | " | " | " |
| OSS | 4.4 | " | " | $1 \times 10^4$ |
| " | " | Buff #150 | 5.2 | $9 \times 10^4$ |
| " | 40 | Buff #300 | 2.5 | " |
| " | " | " | " | " |
| " | 4.4 | " | " | " |

- Cont'd -

Note: *3 OSS: sodium di-2-ethylhexylsulfosuccinate;
SD: Stadis ® 450 (a product of DuPont Co., USA; a mixture of a copolymer of sulfur dioxide and decene-1, a reaction product of epichlorohydrin and N-tallow-1,3-diaminopropane, and dodecylbenzenesulfonic acid.

Table (Cont'd)

| Polymer build-up | | | Properties of polymer | | | |
|---|---|---|---|---|---|---|
| Operation period (day) | U value (kcal/ $m^2 \cdot hr \cdot °C$) *4 | Build-up on visual inspection *5 | M.I. (g/10 min.) | Density (g/ml) | Color | Odor |
| 5 | 640 | No | 0.85 | 0.918 | Good | No |
| 2 | 670 | " | 3.5 | 0.924 | " | " |
| 1 | 690 | " | 2.3 | 0.960 | " | " |
| 4 | 680 | " | 0.006 | 0.928 | " | Some |
| 3 | 520 | Yes | 0.8 | 0.920 | " | No |
| 2 | 510 | " | 3.4 | 0.926 | " | " |
| 0.2 | - | Massive polymer | - | - | - | " |
| 3 | 570 | Yes | 0.84 | 0.919 | Good | " |
| 0.1 | - | " | 0.99 | 0.933 | " | " |
| 0.1 | - | " | 0.29 | 0.930 | " | " |
| 2 | 580 | " | 1.0 | 0.919 | " | " |

Note: *4 Overall heat transfer coefficient of the reactor wall.

*5 Polymer build-up, as confirmed by inspecting the uncovered reactor.

WHAT IS CLAIMED IS:

1. In a process in which at least one olefin is polymerized in the liquid phase in the presence of a catalyst system comprising a solid catalyst component, which contains at least one transition metal compound, and an organoaluminum compound to produce a polyolefin substantially insoluble in said liquid phase, the improvement comprising carrying out said polymerization under the following conditions:

(1) said solid catalyst component is a solid compound prepared by contacting at least one transition metal compound with a solid magnesium compound, 10% by weight or less of the solid catalyst component being 2 μ or less in particle size,

(2) the surfaces of the polymerization vessel in contact with the polymerization mixture are finished to a surface roughness of 2.5 μ or less,

(3) the Reynolds number of the flow of the reaction mixture in the polymerization vessel is maintained at $5 \times 10^4$ or more, and

(4) an antistatic agent is present in an amount of 0.1 to 50 mg/liter based on the volume of the liquid phase.

2. A process according to Claim 1, wherein the solid magnesium compound is a solid product formed by the reaction of an organomagnesium compound with an aluminum halide compound and/or a silicon halide compound; and the transition metal compound is a titanium

compound and/or a vanadium compound.

3. A process according to Claim 1, wherein the antistatic agent is an alkali metal salt of a dialkylsulfosuccinic acid.

4. A process according to Claim 3, wherein the alkali metal salt of the dialkylsulfosuccinic acid is sodium di-2-ethylhexylsulfosuccinate.

5. A process according to Claim 1, wherein the average particle size of the solid catalyst component is 3 μ or above.

6. A process according to Claim 1, wherein the Reynolds number of the flow of reaction mixture is $9 \times 10^4$ or above.

7. A process according to Claim 1, wherein the olefin is ethylene alone or a mixture of ethylene and propylene, butene-1, pentane-1, hexene-1, or octene-1.

European Patent Office

# EUROPEAN SEARCH REPORT

0107127 Application number

EP 83 11 0016

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| D,Y | US-A-4 223 117 (T. SANO et al.)<br>* Claims 1-11 *<br>--- | 1,2,5, 7 | C 08 F 10/00<br>C 08 F 4/60 |
| Y | US-A-3 956 252 (S. SAEDA AND Y. SUZAKA)<br>* Claims 1,8,10; column 2, lines 52-61; column 3, line 6 - column 4, line 42; example 1 *<br>--- | 1-4,7 | |
| Y | US-A-3 995 097 (T.D. BROWN AND M.T. O'SHAUGHNESSY)<br>* Claims 1,4 *<br>--- | 1,3,4, 7 | |
| Y | GB-A-1 088 799 (SHELL)<br>* Claims 1,4,5,23,38,39; page 1, lines 44-56,72-80; page 2, lines 70-92 *<br>--- | 1,3,4 | TECHNICAL FIELDS SEARCHED (Int. Cl. 3) |
| Y | US-A-3 919 185 (S. TAKEBE et al.)<br>* Claims 1,5,11; column 1, lines 50-56 *<br>----- | 1,7 | C 08 F |

The present search report has been drawn up for all claims

| Place of search | Date of completion of the search | Examiner |
|---|---|---|
| THE HAGUE | 16-01-1984 | WEBER H. |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document

EPO Form 1503 03.82